Europäisches Patentamt

European Patent Office

Office européen des brevets

(11) Veröffentlichungsnummer: **0 541 829 B1**

(12) **EUROPÄISCHE PATENTSCHRIFT**

(45) Veröffentlichungstag der Patentschrift: **11.01.95**

(51) Int. Cl.6: **G01D 5/36**

(21) Anmeldenummer: **91118749.0**

(22) Anmeldetag: **04.11.91**

(54) **Vorrichtung zur Erzeugung oberwellenfreier periodischer Signale.**

(43) Veröffentlichungstag der Anmeldung:
**19.05.93 Patentblatt 93/20**

(45) Bekanntmachung des Hinweises auf die
Patenterteilung:
**11.01.95 Patentblatt 95/02**

(84) Benannte Vertragsstaaten:
**DE FR GB IT**

(56) Entgegenhaltungen:
**EP-A- 0 235 750**
**EP-A- 0 250 711**
**FR-A- 2 522 164**
**GB-A- 1 227 942**
**US-A- 4 680 466**

**PATENT ABSTRACTS OF JAPAN vol. 8, no.
18 (P-250)(1455) 26. Januar 1984 & JP-A-58
176 516**

**PATENT ABSTRACTS OF JAPAN vol. 9, no.
210 (P-383)(1933) 28. August 1985 & JP-A-60
073 418**

(73) Patentinhaber: **Dr. Johannes Heidenhain
GmbH
Postfach 12 60
D-83292 Traunreut (DE)**

(72) Erfinder: **Spies, Alfons, Dipl.-Ing.
Wopfnerstrasse 2
W-8221 Seebruck (DE)**
Erfinder: **Franz, Andreas, Dr.
Sonnenleite 21
W-8221 Kienberg (DE)**

## Beschreibung

Die Erfindung bezieht sich auf eine Vorrichtung gemäß dem Oberbegriff des Anspruches 1.

Derartige Vorrichtungen werden zur Messung von Lageänderungen zweier relativ zueinander beweglicher Objekte benötigt. Dabei werden die unterschiedlichsten physikalischen Abtastprinzipien benutzt. Man unterscheidet zwischen fotoelektrischer, magnetischer, induktiver und kapazitiver Abtastung.

Das Grundprinzip ist jedoch allen Methoden gemeinsam: Eine periodische Meßteilung wird abgetastet und das so erzeugte Abtastsignal wird als Meßsignal ausgewertet.

Die Periode der gewonnenen Abtastsignale wird durch die Teilungsperiode oder das Inkrement der Teilung des Teilungsträgers bestimmt. Das Inkrement wird bei fotoelektrischen Meßeinrichtungen durch die Breiten eines lichtdurchlässigen Streifens und eines lichtundurchlässigen Streifens in Meßrichtung gebildet. Bei der Relativbewegung zwischen der Abtasteinheit und der Meßteilung des Teilungsträgers wird von jedem abgetasteten Inkrement ein Zählimpuls abgeleitet, vorzeichenrichtig aufsummiert und die Summe steht als Meßwert zur Verfügung.

Die aus den Teilungen der Teilungsträger bei fotoelektrischen, magnetischen, induktiven und kapazitiven Meßeinrichtungen gewonnenen periodischen Analogsignale weisen im allgemeinen keinen reinen sinusförmigen Verlauf auf, sondern sind beispielsweise infolge von Ungenauigkeiten der Teilungen oberwellenbehaftet. Diese Ungenauigkeiten der Teilungen werden zum Beispiel durch unterschiedliche Abstände der lichtdurchlässigen und lichtundurchlässigen Streifen oder durch eine Kantenunschärfe dieser Streifen hervorgerufen. Um die gewonnenen Analogsignale weitgehend oberwellenfrei zu halten, müssen hohe Anforderungen an die Genauigkeit der Teilungen gestellt werden. Zur Bildung von genauen Positionsmeßwerten für jede Teilungsperiode und um zur weiteren Erhöhung der Auflösung die Teilungsperioden der Teilung durch Bildung von Interpolationswerten exakt unterteilen zu können, muß das aus dieser Teilung gewonnene Analogsignal oberwellenfrei sein; eine Bildung von Interpolationswerten beispielsweise mittels eines Rechners ist in der DE-OS 27 29 697 beschrieben.

Weiterhin sind Meßeinrichtungen bekannt, die dreieckförmige oder trapezförmige Analogsignale liefern, die naturgemäß stets oberwellenbehaftet sind.

Die FR-A-2 522 164 ≙ DE-A-3 305 921 zeigt spezielle optische Mittel auf (Seite 1, Zeilen 19-30), mit denen die Harmonischen (= Oberwellen) minimiert werden können.

Die GB-A-1 227 942 weist auf Seite 2, Zeilen 52-55 daraufhin, daß mittels zusätzlicher Aperturen und unterschiedlicher gegenseitiger Abstände es möglich ist, auch den Effekt von Harmonischen höherer Ordnung zu tilgen. In den vorangehenden Zeilen ist auf die Verringerung von Oberwellen hingewiesen (S. 2, Zeilen 29-51).

In der EP-A-0 235 750 ist die Beseitigung von Anteilen der Oberwellen dritter Ordnung beschrieben (abstract).

In EP-A-0 250 711 ist beschrieben, daß Abtastsignale erzeugt werden, die bis zu einer vorbestimmten Bandbreite oberwellenfrei sind. Dazu sind Teilfelder hinsichtlich ihrer Breiten und Formen sowie im gegenseitigen Lagebezug zueinander ausgewählt (Anspruch 1).

Gemäß Pat.Abstr. of Jap., JP-A-60-73418 verwendet man eine Phasenplatte mit Rautenschlitzen, die zu weniger hohen Oberwellen führt und den Einfluß von Anteilen höherer Harmonischer reduziert.

Zur Gewinnung oberwellenfreier periodischer Signale wird in der DE 32 39 108 C2 vorgeschlagen, die Bandbreite (Anzahl der Frequenzen oder Wellen) des Analogsignals zu ermitteln, die Teilungsperiode der Teilung jeweils mit Abtastelementen abzutasten, die von den Abtastelementen gelieferten periodischen Analogsignale zur Ermittlung von Fourierkoeffizienten der Grundwelle des Analogsignals einer Fourieranalyse zu unterziehen und die Fourierkoeffizienten als oberwellenfreie periodische Signale zur Bildung von Positionsmeßwerten auszuwerten.

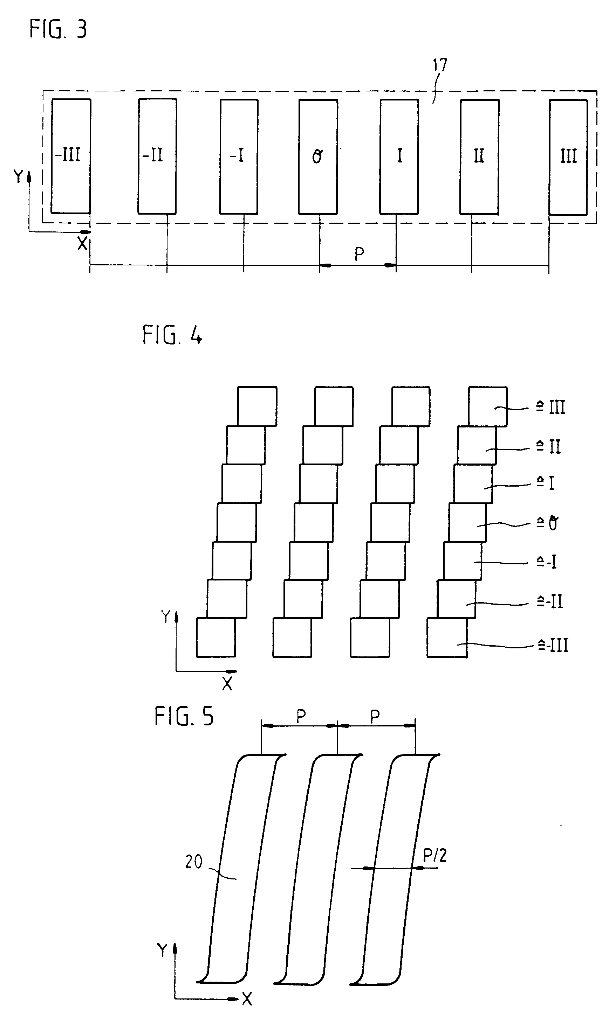

Ein mathematisch äquivalenter, aber ausführungsmäßig völlig anderer Ansatz zur Oberwellenfilterung ist aus der DE 34 12 128 C1 als sogenannte arcsin-Abtastung bekannt. Nach einem 1.Gitter entsteht eine Intensitätsverteilung (Gitterbild im Schattenwurf oder Selbstabbildung in der Talbot-Ebene) die mit einem Gitter variabler Teilung abgetastet wird, wie sie in Figur 3 schematisch dargestellt ist. Nachteilig ist hierbei, daß die ideale Verteilung der arcsin-Abtastteilung je nach Gesamtzahl der Linien -III bis + III (d.h. je nach Breite des Abtastfensters) verschieden ist.

Ein Nachteil auch dieses Verfahrens zur Oberwellenfilterung liegt darin, daß man auf die gleichmäßige Ausleuchtung des gesamten Abtastfensters angewiesen ist. Eine Veränderung der Form des Abtastfensters, z.B. durch Abgleichschrauben, führt zu Fehlfunktionen.

Aus der DE-B-19 41 731 ist eine fotoelektrische Längenmeßeinrichtung bekannt, bei der zur Gewinnung eines oberwellenfreien Analogsignals bei der Abtastung der Teilung eines Teilungsträgers eine Frequenzfilterblende mit einem sinusförmigen Durchlässigkeitsverlauf vorgesehen ist. Bei dieser Meßeinrichtung muß eine spezielle Frequenzfilterblende hergestellt und eingebaut werden. Zudem ist diese Meßeinrichtung auf das fotoelektrische Durchlichtmeßprinzip beschränkt, bei dem ein aus periodischen Helligkeitsschwankungen aufgebautes Streifensystem erzeugt wird. Je eine Frequenzfilterblende wird in Moiree-Streifensysteme eingebracht; die Frequenzfilterblenden können auch direkt auf die Abtastgitter aufgebracht sein.

Der Erfindung liegt die Aufgabe zugrunde, eine Vorrichtung zur Gewinnung oberwellenfreier periodischer Signale anzugeben, die zu diesem Zweck keiner zusätzlichen Elemente bedarf und universell einsetzbar ist.

Diese Aufgabe wird erfindungsgemäß durch die Merkmale des Anspruches 1 gelöst.

Die mit der Erfindung erzielten Vorteile bestehen insbesondere darin, daß auf einfache Weise die Gewinnung oberwellenfreier periodischer Signale lediglich mit abgewandelten herkömmlichen Mitteln bekannter Positionsmeßeinrichtungen ermöglicht wird, ohne daß zusätzliche Elemente wie Frequenzfilterblenden erforderlich sind und ohne daß besondere Anforderungen an die Genauigkeit der Teilung gestellt werden müssen.

Vorteilhafte Weiterbildungen der Erfindung entnimmt man den abhängigen Ansprüchen.

Ausführungsbeispiele der Erfindung werden anhand der Zeichnung näher erläutert.

Es zeigt

Figur 1
eine Längenmeßeinrichtung im Querschnitt;

Figur 2
schematisch eine Abtasteinheit einer fotoelektrischen Längenmeßeinrichtung;

Figur 3
eine Anordnung von Abtastelementen;

Figur 4
eine weitere Anordnung von Abtastelementen;

Figur 5
weitere, sinusförmige Abtastelemente;

Figur 6
eine Gruppe von Teil-Abtastfeldern;

Figur 7a und 7b
verschiedene Teil-Abtastfelder;

Figur 8
eine modifizierte Gruppe von Teil-Abtastfeldern;

Figur 9a
Abtastelemente mit magnetoresistiven Teilelementen;

Figur 9b
ein schematischer magnetischer Maßstab;

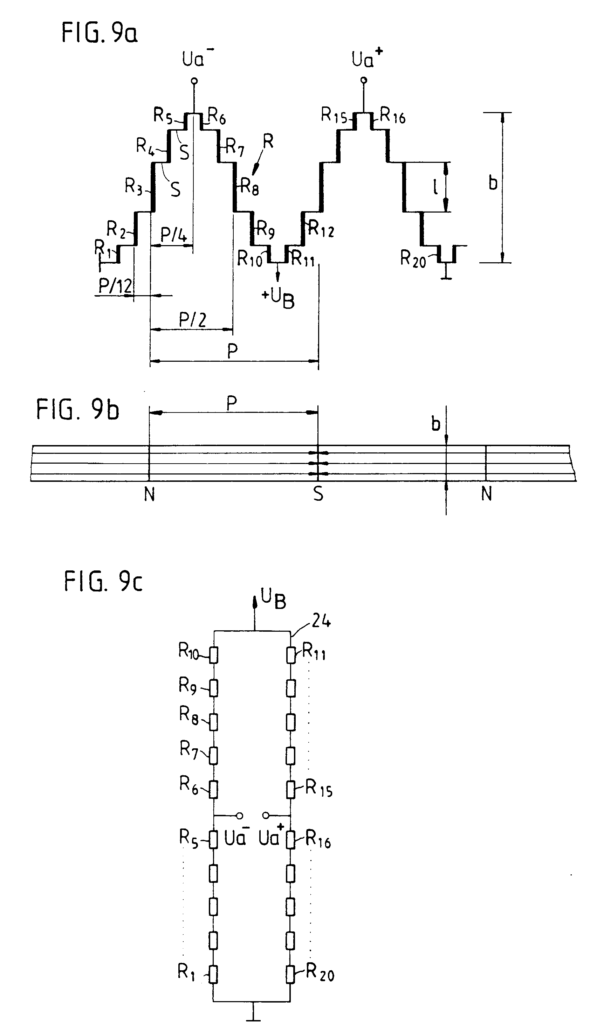

Figur 9c
eine Brückenschaltung der Teilelemente aus Figur 9a;

Figur 10
ein Abtastelement mit sinusförmigem Verlauf;

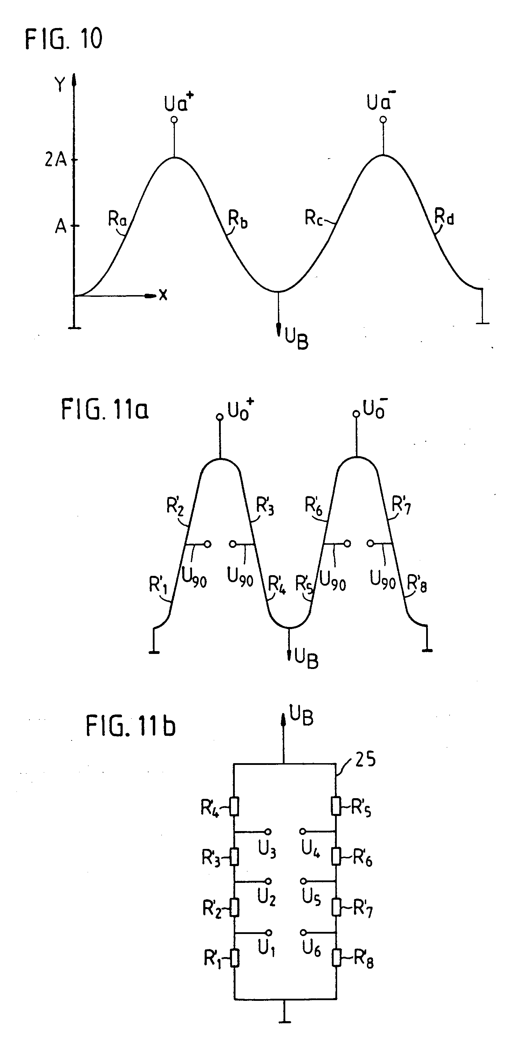

Figur 11a
eine Variante eines Abtastelementes aus Figur 10;

Figur 11b
eine zum Abtastelement gemäß Figur 11a gehörige Brückenschaltung;

Figur 12
Teilelemente mit Längenstaffelung nach einer Sinusfunktion;

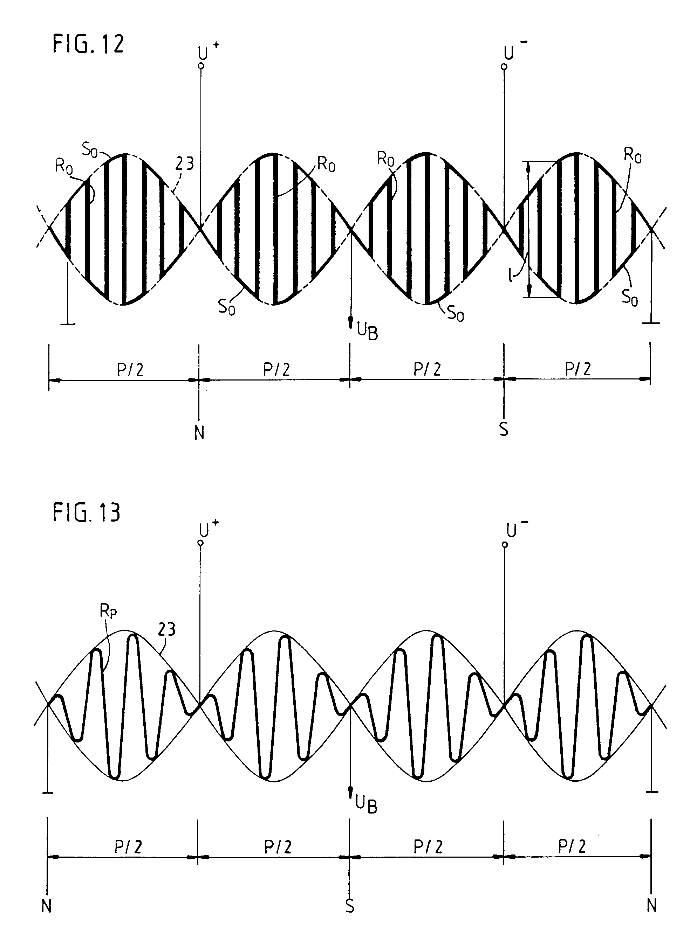

Figur 13
eine Weiterbildung der Teilfelder nach Figur 12;

Figur 14
streifenförmige Abtastelemente;

Figur 15
weitere streifenförmige Abtastelemente und

Figur 16
eine weitere Variation eines Abtastelementes.

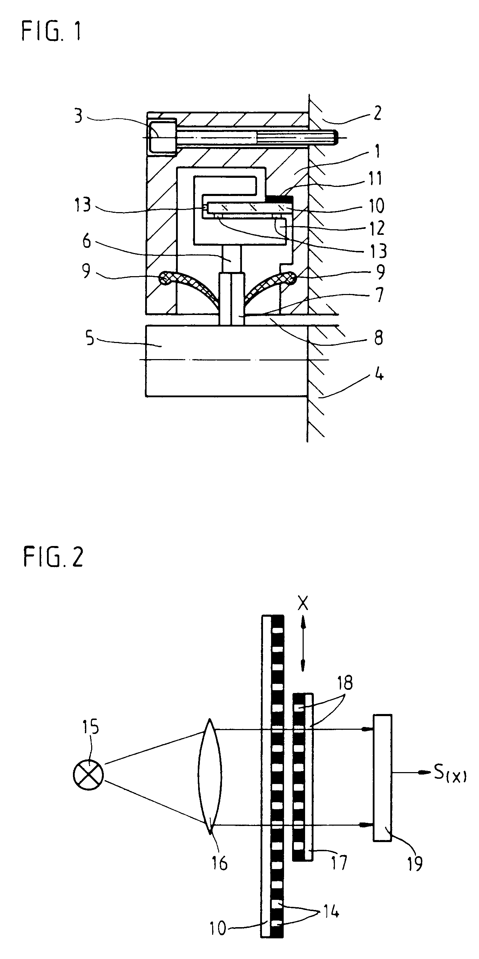

In Figur 1 ist eine Längenmeßeinrichtung im Querschnitt dargestellt, deren Gehäuse 1 in Form eines Hohlprofils an einem Bett 2 einer nicht dargestellten Bearbeitungsmaschine mittels einer Schraubverbindung 3 befestigt ist. An einem Schlitten 4 der Bearbeitungsmaschine ist ein Montagefuß 5 mit einem Mitnehmer 6 in beliebiger Weise befestigt, der über eine schneidenförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab 10 mittels einer elastischen Klebeschicht 11 angebracht, an dem sich eine Abtasteinheit 12 über Rollen 13 abstützt; die Relativbewegung des Schlittens 4 bezüglich des Betts 2 wird vom Mitnehmer 6 auf die Abtasteinheit 12 übertragen.

Gemäß Figur 2 sind zur Abtastung einer Teilung 14 des Maßstabs 10 in der Abtasteinheit 12 eine Lichtquelle 15, ein Kondensor 16, eine Abtastplatte 17 mit einer Teilung 18 und ein Photoelement 19 angeordnet. Der von der Lichtquelle 15 ausgehende Lichtstrom wird vom Kondensor 16 parallel gerichtet, durchsetzt die Teilungen 14, 18 des Maßstabs 10 und der Abtastplatte 17 und fällt anschließend auf das Photoelement 19. Bei der Bewegung der Abtasteinheit 12 mit der Abtastplatte 17 in Meßrichtung X gegenüber dem feststehenden Maßstab 10 wird der Lichtstrom an den Teilungen 14, 18 moduliert, so daß das Photoelement 19 ein periodisches elektrisches Analogsignal S (X) liefert, das ausgewertet, gezählt und in digitaler Form als Positionsmeßwert zur Anzeige gebracht wird.

Das vom Photoelement 19 gelieferte periodische Analogsignal S (X) ist im allgemeinen z.B. aufgrund von Ungenauigkeiten der Teilungen 14, 18 oberwellenbehaftet und kann als Funktion des Meßweges X durch eine Fourierreihe dargestellt werden.

In Figur 4 ist ein Oberwellenfilter dargestellt, dessen Funktion weitgehend unabhängig von der aktuellen Größe des Abtastfensters garantiert ist.

Die ursprüngliche arcsin-Teilung (Figur 3) läßt sich gemäß Figur 4 anders anordnen, indem die Striche -III bis +III in y-Richtung quasi abgeschnitten und in x-Richtung in gleichen relativen Positionen neu angeordnet werden. Diese Teilelemente -III bis +III sind dann in y-Richtung (die dem Verlauf der Gitterlinien der Meßteilung entspricht) übereinander angeordnet und weisen in Meßrichtung (x-Richtung) zueinander einen Versatz auf, der einer arcsin-Funktion entspricht.

Der Grenzübergang zu immer feinerer Unterteilung führt schließlich zu den sinusförmig gebogenen Abtastelementen 20 in Figur 5, die exakt das gleiche Filterverhalten wie die ursprüngliche arcsin-Teilung nach Figur 3 aufweisen. Damit werden also alle ungeraden Oberwellen unterdrückt. Die geraden Oberwellen werden vorteilhaft durch ein 1:1 Strich-Lücke-Verhältnis der Abtastelemente 20 eliminiert. Jedes in Figur 5 dargestellte Abtastelement 20 stellt ein komplettes Oberwellenfilter dar, bzw. liefert ein oberwellenfreies Abtastsignal.

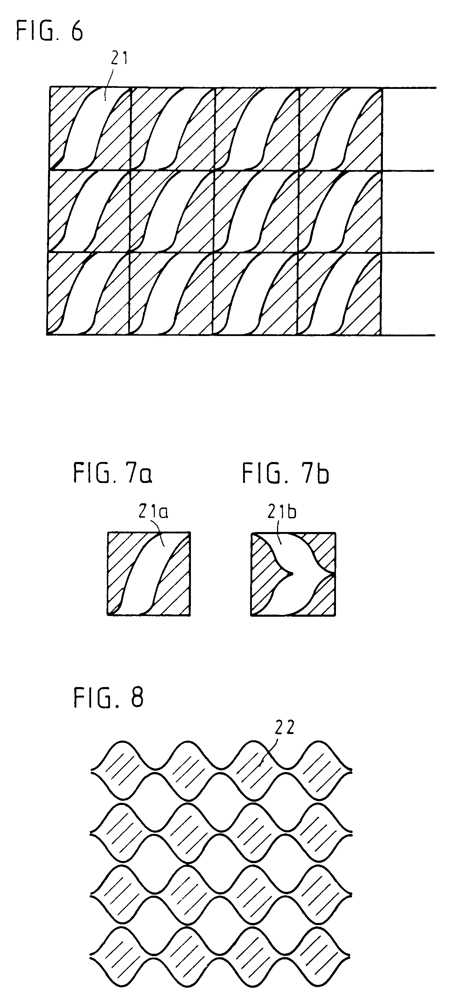

Allerdings ist diese Ausführungsform noch nicht unempfindlich gegenüber Veränderungen der Länge in y-Richtung. Dies wird dadurch erreicht, daß Abtastelemente 21 in y-Richtung "gestaucht" werden - was auf ihre Funktion keinerlei Einfluß hat - und daß dafür viele solche Elemente übereinander gesetzt werden (Figur 6). Die komplette Abtastteilung setzt sich also aus vielen kleinen, absolut identischen Teilfeldern 21 zusammen. Damit hat aber eine Änderung der Form des Abtastfensters keinen Einfluß mehr, da nicht mehr wie noch in Figur 3 oder 5 wesentliche Teile der Filterfunktion wegfallen können.

Ein weiterer Vorteil liegt darin, daß die Form der Filterlinien nur noch von der Teilungsperiode P, aber nicht mehr von der Größe des Abtastfenstern abhängt. Alle Meßsysteme mit gleicher Teilungsperiode P können somit auf die gleichen Filterelemente 21 zurückgreifen. Bei der bekannten arcsin-Abtastung mußte für jede Abtastteilung mit etwas geänderten Abtastfenstern eine neue arcsin-Teilung berechnet und hergestellt werden.

Ausgehend von dem Teilelement 21a in Figur 7 lassen sich weitere mögliche Ausformungen finden. Das Teilelement 21b entsteht z.B. durch Kopf-an-Kopf-Zusammensetzen (180°) von zwei Teilelementen vom Typ 21a.

Die Dimension eines Teilelementes 21 ist in x-Richtung gleich der Periode P der abzutastenden Intensitätsverteilung. Die Ausdehnung in y-Richtung ist zunächst beliebig, solange innerhalb des Abtastfensters nur genügend Teilelemente 21 zu liegen kommen. Vorteilhaft ist eine quadratische Form der Teilelemente 21.

Wird die Gruppe von Teilelementen weiter optimiert, gelangt man zu einem Abtastelement in der Gestalt des Feldes 22 aus Figur 8.

Die grundsätzliche Gleichartigkeit des Meßprinzips schließt nicht Modifikationen in der Ausgestaltung der Meßteilung bzw. der Abtastteilung aus, die sich in den folgenden Ausführungsbeispielen und den abhängigen Ansprüchen niederschlagen.

Ein magnetischer Maßstab 23 wird gemäß Figur 9b über die Breite b mit magnetoresistiven Teilelementen $R_n$ gemäß Figur 9a abgetastet.

Die Teilelemente $R_n$ sind, wie in Figur 9c gezeigt, zu einer Brücke zusammengeschaltet. An der Brückendiagonale wird das Signal Ua+ - Ua-abgenommen. Die Brücke wird mit der Spannung $U_B$ gespeist. Die Filterung erfolgt durch Mehrfachabtastung innerhalb einer Periode P. Dazu ist ein Abtastelement R in Teilelemente $R_n$ aufgeteilt, die versetzt zueinander angeordnet sind. Die Länge der Teilelemente $R_n$ ist in Abhängigkeit ihres Versatzes so zu wählen, daß Oberwellen im Abtastsignal herausgefiltert werden. Werden z.B. auf eine Strecke von 1/2 Teilungsperioden P fünf Teilelemente R1 bis R5 verteilt, die zusammen einen Teil einer Halbbrücke (Figur 9c) bilden, so bestimmt sich ihre Länge in Abhängigkeit von ihrer Lage zu

$$L_n = A^* \sin(\pi n/N) \text{ mit } N = 6.$$

Die Teilelemente Rn selbst sind miteinander durch Stege S, die unempfindlich sind gegenüber Magnetfeldern, verbunden. Die Teilelemente $R_k$ die auf eine Periode P verteilt sind, bilden jeweils eine Halbbrücke. Die daran anschließenden Teilelemente $R_L$, bilden den gegenüberliegenden Zweig der Brücke, so daß die Teilelemente $R_n$, die auf zwei Perioden P verteilt sind, jeweils eine Vollbrücke bilden.

Zur Gewinnung von phasenverschobenen Signalen können wie üblich weitere Abtastelemente R in Form von Gruppen von Teilelementen $R_n$ angeordnet sein, die zu der 1. Teilelementengruppe um 1/4 Periode P versetzt sind.

Es ist selbstverständlich, daß auch die Abtastelemente R mehrerer Perioden P zueinander parallel geschaltet werden können, so daß sich eine größere Abtastlänge ergibt.

Teilt man die Periode P in immer mehr gleiche Teile ein, so kommt man zu der in Figur 10 gezeigten Ausführung. In dem dort gezeichneten Koordinatensystem (x, y) hat das Abtastelement $R_a$ bis $R_d$ das jetzt einen kontinuierlichen Verlauf hat, die Form

$$y = A(1 - \cos(2\pi x/P)).$$

Bei der Abtastung mit einem so geformten magnetoresistiven Abtastelement $R_a$ bis $R_d$ kann gegenüber der Anordnung nach Figur 9a ein kleiner Empfindlichkeitsverlust auftreten, da das abtastende Element jetzt nicht mehr genau parallel zu der Teilung verläuft. Gegebenenfalls ist diese Empfindlichkeitsänderung bei der Kurvenform zu berücksichtigen.

Zur Erzeugung von zueinander phasenverschobenen Signalen dient eine Lösung gemäß Figur 11a, bei der die Signale sinus und cosinus aus einem Abtastfeld gewonnen werden.

Das Sinussignal erhält man aus der Brückenschaltung nach Figur 11b, wenn man die Differenz der Spannungen $U_2$-$U_5$ bildet.

Ein dazu um 90° phasenverschobenes Signal erhält man, wenn man folgende Summen und Differenzen bildet:

$$U_{90} = U_1 + U_6 - (U_3 + U_4).$$

Die Summen und Differenzen können mit einem nichtdargestellten Verstärker gebildet werden.

Das Signal $U_{90}$ hat einen Gleichspannungspegel entsprechend der Speisespannung $U_B$. Es kann durch Subtraktion der Speisespannung symmetrisch zu Null gemacht werden.

Figur 12 zeigt eine weitere Ausführung der Erfindung. Es ist wieder eine Anzahl von magnetfeldempfindlichen Strichen (Teilelemente $R_o$) über die Teilungsperiode P verteilt angeordnet. Nur die den Gitterlinien der Meßteilung parallel liegenden Teilelemente $R_o$ sind magentfeldempfindlich, sie sind an ihren Enden durch elektrisch leitende, aber magnetisch unempfindliche Stege $S_o$ verbunden. Die Teilelemente $R_o$, die einer Teilungsperiode P entsprechen bilden wieder einen Teil einer Halbbrücke.

Das Wesentliche liegt nun darin, daß die Länge der Teilelemente $R_o$ in Abhängigkeit von ihrer Lage wieder sinusförmig variiert ist. Dadurch werden die Oberwellen bis zur Ordnungszahl N-2, wenn N die Anzahl der auf eine Teilungsperiode P fallenden Teilelemente $R_o$ ist, herausgefiltert.
und $U_B$ zugeführt, die um eine Teilungsperiode P voneinander entfernt sind. Die Signalspannung wird an den Punkten $U^+$ bzw. $U^-$ abgegriffen.

Figur 13 zeigt eine Kombination der Ausführungsformen aus Figur 10 und Figur 12. Jedes magnetfeldempfindliche Teilelement $R_P$ kann sinusförmig gebogen sein, so daß eine noch größere Filterwirkung eintritt.

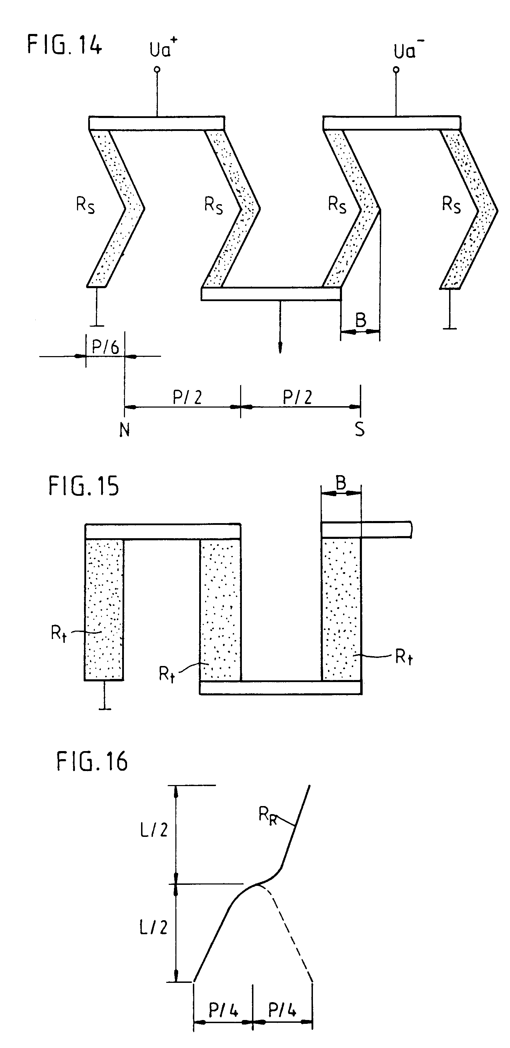

Eine Filterung kann auch durch Wahl der wirksamen Breite B der Teilelemente $R_s$ erfolgen. Dies wird in den Figuren 14 und 15 gezeigt. Durch die Wahl der Abtastbreite B kann gezielt eine Oberwelle herausgefiltert werden. Wählt man z.B. die wirksame Breite B eines Teilelementes $R_S$, $R_T$ zu 1/6 der Teilungsperiode P, so kann die 6. Oberwelle sowie ganzzahlige Vielfache davon herausgefiltert werden. Allgemein gilt, daß für eine Breite B = Periode P/n die n.te Oberwelle sowie deren Vielfache herausgefiltert werden können.

In Figur 14 sind schmale magnetoresistive Streifen $R_S$ gezeigt. Sie verlaufen in einem Winkel zu den bereits vorerwähnten Teilungsmarkierungen der Meßteilung.

Der Verlauf ist dabei so gewählt, daß sie 1/6 der Teilungsperiode P überdecken - ihre wirksame Breite B ist also 1/6 der Teilungsperiode P.

Der gleiche Erfolg wird mit Teilelementen $R_T$ erzielt, deren tatsächliche Breite B (die dann der wirksamen Breite B entspricht) 1/6 der Teilungsperiode P beträgt. Dieser Fall ist schematisch in Figur 15 dargestellt.

Schließlich zeigt Figur 16 noch eine weitere Variante, bei der ein sinusförmig verlaufendes Teilelement $R_R$ so gestaltet ist, daß sein abfallender Kurventeil im Maximum gespiegelt ist.

Es versteht sich, daß über die gezeigten Ausführungsbeispiele hinaus Variationen innerhalb des Beanspruchten möglich sind. Eine Vertauschung von Meßteilung und Abtastteilung ist möglich, da diese Bezeichnungen von der Betrachtungsweise abhängen und daher relativ sind.

**Patentansprüche**

1. Vorrichtung zur Gewinnung von Signalen, die durch Abtastung einer periodischen Meßteilung mit einer Abtastteilung erzeugt werden, und die bis zu einer vorbestimmbaren Bandbreite oberwellenfrei sind, wobei zur Abtastung einer Teilungsperiode mindestens ein Abtastelement vorgesehen ist, dadurch gekennzeichnet, daß das Abtastelement aus Teilelementen ($R_n$, $R_o$, $R_p$) besteht, die sich im Wesentlichen quer zur Meßrichtung (X) erstrecken und die in Meßrichtung (X) äquidistant zueinander versetzt sind, wobei sich ihre Länge (l) in Abhängigkeit von ihrer Lage nach einer Sinus- oder Cosinus-Funktion bestimmt.

2. Vorrichtung zur Gewinnung von Signalen, die durch Abtastung einer periodischen Meßteilung mit einer Abtastteilung erzeugt werden, und die bis zu einer vorbestimmbaren Bandbreite oberwellenfrei sind, wobei zur Abtastung einer Teilungsperiode mindestens ein Abtastelement vorgesehen ist , dadurch gekennzeichnet, daß das Abtastelement in Richtung der Gitterlinien der Meßteilung (14) aus mehreren gleichlangen Teilfeldern (-III bis +III) besteht, die senkrecht zum Verlauf der Gitterlinien der Meßteilung (14) nach einer arcsinFunktion zueinander versetzt angeordnet sind.

3. Vorrichtung nach Anspruch 2, dadurch gekennzeichnet, daß bei fotoelektrischer Abtastung die Teilfelder (-III bis +III) die Breite einer halben Teilungsperiode (P) aufweisen.

4. Vorrichtung nach einem der Ansprüche 1 bis 3, dadurch gekennzeichnet, daß über mehrere Teilungsperioden (P) mehrere Abtastelemente (u.a. 20) in Meßrichtung (X) hintereinander angeordnet sind und deren Abtastsignale zusammengefaßt werden.

5. Vorrichtung nach Anspruch 1, dadurch gekennzeichnet, daß bei Abtastung mit magnetoresistiven Elementen mit zunehmender Anzahl der Teilelemente pro Teilungsperiode das Abtastelement ($R_a$ bis $R_d$) einen kontinuierlichen, näherungsweise sinusförmigen Verlauf aufweist.

6. Vorrichtung nach Anspruch 1, dadurch gekennzeichnet, daß eine Hüllkurve (23) über die Teilelemente ($R_o$, $R_p$) einen sinusförmigen Verlauf und die gleiche Periode (P) aufweist, wie die Teilungsperiode (P) der abzutastenden Meßteilung (14).

7. Vorrichtung nach Anspruch 1, dadurch gekennzeichnet, daß die Teilelemente ($R_p$) sinusförmig gebogen sind.

8. Vorrichtung nach Anspruch 1, dadurch gekennzeichnet, daß die wirksame Breite (B) des Abtastelementes ($R_s$, $R_t$) einem Bruchteil einer Teilungsperiode (P) entspricht, wobei der Bruchteil dem Kehrwert der Ordnungszahl der Harmonischen entspricht, die aus dem Abtastsignal ausgefiltert werden soll.

9. Vorrichtung nach Anspruch 8, dadurch gekennzeichnet, daß das Abtastelement ($R_t$) parallel zu den Gitterlinien der Meßteilung (14) verläuft und die vorgegebene Breite aufweist.

10. Vorrichtung nach Anspruch 8, dadurch gekennzeichnet, daß das Abtastelement ($R_s$) streifenförmig ausgebildet ist und in einem Winkel zu den Gitterlinien der Meßteilung (14) verläuft, wobei es sich über den vorgegebenen Bruchteil der Teilungsperiode (P) erstreckt.

11. Vorrichtung nach einem der Ansprüche 1, 2 oder 10, dadurch gekennzeichnet, daß die Teilelemente ($R_a$ bis $R_d$, $R_n$, $R'_1$ bis $R'_8$) in einer Brückenschaltung (24, 25) zusammengeschaltet sind.

## Claims

1. Device for obtaining signals which are generated by scanning a periodic measuring graduation with a scanning graduation, and which are free from harmonic waves up to a bandwidth which can be predetermined, wherein at least one scanning element is provided for scanning a graduation period, characterised in that the scanning element consists of partial elements ($R_n$, $R_o$, $R_p$) which extend essentially transversely to the direction of measurement (X) and which are offset from each other equidistantly in the direction of measurement (X), wherein their length (l) is determined as a function of their position according to a sine or cosine function.

2. Device for obtaining signals which are generated by scanning a periodic measuring graduation with a scanning graduation, and which are free from harmonic waves up to a bandwidth which can be predetermined, wherein at least one scanning element is provided for scanning a graduation period, characterised in that the scanning element in the direction of the grid lines of the measuring graduation (14) consists of several partial areas (-III to +III) of equal length which are arranged offset from each other perpendicularly to the course of the grid lines of the measuring graduation (14) according to an arc sine function.

3. Device according to claim 2, characterised in that in photoelectric scanning the partial areas (-III to +III) have the width of half a graduation period (P).

4. Device according to any of claims 1 to 3, characterised in that over several graduation periods (P) several scanning elements (inter alia 20) are arranged one behind the other in the direction of measurement (X) and their scanning signals are combined.

5. Device according to claim 1, characterised in that in scanning with magnetoresistive elements with an increasing number of partial elements per graduation period, the scanning element ($R_a$ to $R_d$) has a continuous, approximately sinusoidal course.

6. Device according to claim 1, characterised in that an envelope curve (23) over the partial elements ($R_o$, $R_p$) has a sinusoidal course and the same period (P) as the graduation period (P) of the measuring graduation (14) to be scanned.

7. Device according to claim 1, characterised in that the partial elements ($R_p$) are curved sinusoidally.

**8.** Device according to claim 1, characterised in that the effective width (B) of the scanning element ($R_s$, $R_t$) corresponds to a fraction of a graduation period (P), wherein the fraction corresponds to the reciprocal of the ordinal number of the harmonic which is to be filtered out of the scanning signal.

**9.** Device according to claim 8, characterised in that the scanning element ($R_t$) extends parallel to the grid lines of the measuring graduation (14) and has the predetermined width.

**10.** Device according to claim 8, characterised in that the scanning element ($R_s$) is strip-shaped and extends at an angle to the grid lines of the measuring graduation (14), wherein it extends over the predetermined fraction of the graduation period (P).

**11.** Device according to any of claims 1, 2 or 10, characterised in that the partial elements ($R_a$ to $R_d$, $R_n$, $R'_1$ to $R'_8$) are interconnected in a bridge circuit (24, 25).

**Revendications**

**1.** Dispositif pour l'obtention de signaux qui sont produits par lecture d'une graduation de mesure périodique au moyen d'une graduation de lecture et qui, jusqu'à une largeur de bande prédéterminée, sont exempts d'harmoniques, au moins un élément de lecture étant prévu pour la lecture d'une période de graduation, caractérisé par le fait que l'élément de lecture se compose de sous-éléments ($R_n$, $R_o$, $R_p$) qui s'étendent essentiellement transversalement à la direction de mesure (X) et sont décalés les uns par rapport aux autres d'une même distance dans la direction de mesure (X), leur longueur (l) étant déterminée par une fonction sinus ou cosinus, en fonction de leur position.

**2.** Dispositif pour l'obtention de signaux qui sont produits par lecture d'une graduation de mesure périodique au moyen d'une graduation de lecture et qui, jusqu'à une largeur de bande prédéterminée, sont exempts d'harmoniques, au moins un élément de lecture étant prévu pour la lecture d'une période de graduation, caractérisé par le fait que dans la direction des lignes de réseau de la graduation de mesure (14), l'élément de lecture se compose de plusieurs zones de lecture (-III à +III) de même longueur qui sont disposées perpendiculairement aux lignes de réseau de la graduation de mesure (14) et sont mutuellement décalées conformément à une fonction arcsinus.

**3.** Dispositif selon la revendication 2, caractérisé par le fait que dans le cas d'une lecture par des moyens photo-électriques les sous-champs (-III à +III) ont une largeur égale à la moitié de la période de graduation (P).

**4.** Dispositif selon l'une des revendications 1 à 3, caractérisé par le fait que plusieurs éléments de lecture (notamment 20) sont disposés l'un derrière l'autre dans la direction de mesure (X) sur plusieurs périodes de graduation (P) et que les signaux de lecture de ceux-ci sont combinés.

**5.** Dispositif selon la revendication 1, caractérisé par le fait que dans le cas d'éléments magnéto-résistifs, avec un nombre croissant de sous-éléments par période de graduation, l'élément de lecture ($R_a$ à $R_d$) présente un tracé continu sensiblement sinusoïdal.

**6.** Dispositif selon la revendication 1, caractérisé par le fait qu'une courbe enveloppe (23) des sous-éléments ($R_o$, $R_p$) présente un tracé sinusoïdal et a la même période (P) que la période de graduation (P) de la graduation de mesure (14) à lire.

**7.** Dispositif selon la la revendication 1, caractérisé par le fait que les sous-éléments ($R_p$) ont une courbure en forme de sinusoïde.

**8.** Dispositif selon la revendication 1, caractérisé par le fait que la largeur (B) active de l'élément de lecture ($R_s$, $R_t$) correspond à une fraction de la période de graduation (P), la fraction correspondant à la valeur inverse de l'ordre de l'harmonique devant être éliminée du signal de lecture.

**9.** Dispositif selon la revendication 8, caractérisé par le fait que l'élément de lecture ($R_t$) s'étend parallèlement aux lignes de réseau de la graduation de la mesure (14) et a la largeur prédéterminée.

**10.** Dispositif selon la revendication 8, caractérisé par le fait que l'élément de lecture ($R_s$) est agencé sous forme de bande et forme un angle avec les lignes de réseau de la graduation de mesure (14), l'élément de lecture s'étendant sur la fraction prédéterminée de la période de graduation (P).

**11.** Dispositif selon l'une des revendications 1, 2 ou 10, caractérisé par le fait que les sous-éléments ($R_a$ à $R_d$, $R_n$, $R'_1$ à $R'_8$) sont connectés entre eux dans un circuit en pont (24, 25).

FIG. 1

FIG. 2

FIG. 3

FIG. 4

FIG. 5

FIG. 6

21

FIG. 7a

21a

FIG. 7b

21b

FIG. 8

22

FIG. 9a

FIG. 9b

FIG. 9c

FIG. 10

FIG. 11a

FIG. 11b

FIG. 12

FIG. 13

FIG.14

$Ua^+$

$Ua^-$

$R_S$ $R_S$ $R_S$ $R_S$

B

P/6

P/2 P/2

N S

FIG.15

B

$R_t$ $R_t$ $R_t$

FIG.16

L/2

$R_R$

L/2

P/4 P/4

14